# FASCICULE DE BREVET EUROPEEN

(11) **EP 3 184 870 B1**
(45) Date de publication et mention de la délivrance du brevet: **20.02.2019**
(21) Numéro de dépôt: 16206071.9
(22) Date de dépôt: 22.12.2016
(51) Int. Cl.: F16L 37/138, F16L 37/23

(54) **ELÉMENT FEMELLE DE RACCORD RAPIDE ET RACCORD RAPIDE COMPRENANT UN TEL ÉLÉMENT FEMELLE**
BUCHSE EINES SCHNELLANSCHLUSSES, UND EINE SOLCHE BUCHSE UMFASSENDER SCHNELLANSCHLUSS
SOCKET ELEMENT FOR A QUICK CONNECTOR AND QUICK CONNECTOR COMPRISING SUCH A SOCKET ELEMENT

(30) Priorité: 23.12.2015 FR 1563230
(43) Date de publication de la demande: 28.06.2017
(73) Titulaire: Staubli Faverges, 74210 Faverges (FR)
(72) Inventeur: TIBERGHIEN, Alain-Christophe, 74320 Sevrier (FR); DURIEUX, Christophe, 73200 Gilly sur Isere (FR)
(74) Mandataire: Lavoix

(56) Documents cités:
- CN-A- 103 851 288
- FR-A1- 2 516 201
- US-A1- 2008 088 127

## Description

La présente invention concerne un élément femelle de raccord rapide, cet élément femelle étant apte à être accouplé avec un élément mâle de raccord rapide complémentaire pour former un raccord rapide pour la jonction de conduites de fluide, ainsi qu'un raccord rapide comprenant un tel élément femelle et un élément mâle de raccord rapide complémentaire.

Certains raccords connus sont pourvus d'un système de verrouillage automatique de l'accouplement et sont dénommés "raccord rapide". Ce type de raccord est utilisé couramment pour connecter deux extrémités de conduites entre elles, pour le transport d'un fluide gazeux ou liquide, notamment pour des branchements rapides sur canules pour banc de test de moteurs, à chaud ou à froid. Généralement, ce type de raccord comporte un corps d'accueil formant un embout femelle du raccord, et destiné à être fixé à l'une des deux extrémités de conduite à accoupler. Ce raccord comporte également un embout mâle monté à l'autre des deux extrémités de conduite à accoupler et conçu pour être accouplé à l'embout femelle en étant emmanché dans le corps d'accueil et verrouillé en son sein. Ce dernier est pourvu de moyens pour assurer l'étanchéité de l'accouplement, de sorte que les deux conduites sont connectées de façon étanche.

FR-A-2 516201 décrit un raccord rapide dans lequel l'embout femelle comprend un joint torique pour assurer l'étanchéité de l'accouplement. Ce joint torique est monté en appui axial contre un poussoir interne de l'élément femelle, lequel est lui-même repoussé par un ressort vers l'embouchure de l'embout femelle, de sorte que, lorsque l'embout mâle est accouplé, le ressort plaque le joint torique contre l'embout mâle par l'intermédiaire du poussoir. Ce système permet d'ajuster la position axiale du joint d'étanchéité à la longueur effective de la partie extrémale de l'embout mâle, laquelle est susceptible de varier d'un embout mâle à l'autre. Dans ce raccord connu, le joint est prévu pour être en appui contre l'extrémité axiale de l'embout mâle, lequel présente une forme arrondie, de sorte que le joint assure une étanchéité frontale du raccord.

Néanmoins, il s'avère que, dans le cas où la partie extrémale de l'élément mâle accouplé avec l'embout femelle présente un diamètre externe particulièrement faible et une longueur axiale particulièrement élevée, un débattement angulaire de l'embout mâle au sein de l'embout femelle est susceptible de se produire. Ce débattement peut être à l'origine d'un positionnement inadéquat du joint contre l'extrémité axiale de l'embout mâle, ce qui entraîne un défaut d'étanchéité du raccord avant et/ou après la mise sous pression de la conduite.

De plus, dans ce raccord connu, lorsqu'aucun embout mâle n'est accouplé avec l'embout femelle, le poussoir comprime systématiquement le joint contre une butée du corps d'accueil sous l'action du ressort, de sorte que le joint est inutilement sollicité en configuration désaccouplée. Lors de l'accouplement, le joint frotte contre la surface interne du corps d'accueil sous l'action de l'embout mâle déplaçant le poussoir, ce qui limite la durée de vie de ce joint.

En conséquence, l'invention vise à porter remède aux inconvénients de l'art antérieur susmentionnés, et propose un nouvel élément femelle apte à assurer une étanchéité optimale en dépit des éventuelles dispersions de géométrie des éléments mâles avec lesquels l'élément femelle est susceptible d'être accouplé, avec une durée de vie prolongée du joint.

L'invention a pour objet un élément femelle de raccord rapide étant apte à être accouplé avec un élément mâle de raccord rapide complémentaire pour la jonction de deux conduites de fluide, l'élément femelle comprenant :
- un corps femelle qui définit un axe longitudinal d'accouplement et qui est apte à recevoir l'élément mâle introduit selon une direction arrière,
- une bague poussoir, qui est montée mobile en translation à l'intérieur du corps femelle le long de l'axe longitudinal d'accouplement,
- un élément de rappel élastique de la bague poussoir dans une direction avant, opposée à la direction arrière, par rapport au corps femelle, et
- un joint principal d'étanchéité logé dans un logement de l'élément femelle et apte à coopérer avec l'élément mâle introduit dans le corps femelle,

### Selon l'invention :

- l'élément femelle comprend en outre une bague tiroir, qui est mobile par rapport au corps femelle le long de l'axe longitudinal d'accouplement et qui est disposée autour de la bague poussoir, la bague tiroir formant un fond et une paroi avant du logement du joint principal, la paroi avant étant tournée dans la direction arrière,
- une extrémité avant de la bague poussoir forme une paroi arrière du logement du joint principal, un diamètre intérieur de l'extrémité avant étant inférieur à un diamètre intérieur du joint principal, et
- la bague poussoir est mobile en translation par rapport à la bague tiroir le long de l'axe longitudinal d'accouplement.

Grâce à l'invention, le joint principal est disposé dans la bague tiroir, et en particulier dans un logement qui est délimité axialement par la bague poussoir et la bague tiroir, lesquelles forment un ensemble mobile qui suit le déplacement de l'élément mâle par rapport au corps femelle, selon l'axe longitudinal d'accouplement, en cours d'accouplement, de sorte que le joint principal n'est pas soumis à des frottements contre l'élément femelle et est ainsi préservé de l'usure. De plus, le logement présente une longueur variable qui s'adapte sous l'action combinée de l'élément de rappel élastique et de la déformation du joint principal. La déformation du joint principal dépendant de la géométrie, notamment de la valeur du diamètre extérieur, de l'élément mâle, l'étanchéité du raccord rapide est ainsi optimisée, quelle que soit la géométrie de l'élément mâle, par adaptation de la longueur variable du logement. Par ailleurs, la valeur de l'effort nécessaire pour accoupler ou désaccoupler l'élément mâle est réduite, dans la mesure où la longueur du logement peut augmenter pour autoriser une libre déformation du joint principal, dans le cas où l'élément mâle présente un diamètre particulièrement élevé.

Selon d'autres caractéristiques avantageuses de l'invention, prises isolément ou en combinaison :
- la bague poussoir est apte à venir en butée contre la bague tiroir selon la direction arrière ;
- l'élément femelle comprend des moyens de rappel élastique de la bague tiroir en butée contre le corps femelle selon la direction avant en configuration désaccouplée ;
- la bague poussoir est apte à venir en butée contre la bague tiroir selon la direction avant ;
- en configuration désaccouplée, l'élément de rappel élastique rappelle la bague poussoir en butée dans la direction avant contre la bague tiroir, une longueur axiale du logement, mesurée entre la paroi avant et la paroi arrière parallèlement à l'axe longitudinal d'accouplement, étant alors supérieure à une épaisseur axiale, mesurée parallèlement à l'axe longitudinal d'accouplement, du joint principal à l'état libre ;
- selon une direction radiale interne par rapport à l'axe longitudinal d'accouplement, la paroi arrière s'étend au-delà de la paroi avant ;
- selon une direction radiale interne par rapport à l'axe longitudinal d'accouplement, la paroi arrière s'étend au-delà du joint principal ;
- la bague tiroir et la bague poussoir forment un ensemble mobile à l'intérieur du corps femelle et l'élément femelle comprend en outre un joint auxiliaire qui est disposé entre l'ensemble mobile et le corps femelle;
- la bague poussoir est apte à venir en butée contre le corps femelle selon la direction arrière ;
- la bague tiroir comprend une surface avant conique qui est coaxiale avec l'axe longitudinal d'accouplement et qui converge selon la direction arrière, avec un angle de convergence compris entre 45 et 70° ;
- l'élément femelle comprend un dispositif de verrouillage de l'élément mâle dans le corps femelle dans une configuration accouplée du raccord rapide, le dispositif de verrouillage comprend comprenant des éléments de verrouillage mobiles dans le corps femelle, entre une position radiale interne de verrouillage de l'élément mâle et une position radiale externe de déverrouillage de l'élément mâle, le dispositif de verrouillage comprenant et une bague de verrouillage mobile entre une position de blocage des éléments de verrouillage en position radiale interne et une position de déblocage autorisant le mouvement radial des éléments de verrouillage ; et
- le dispositif de verrouillage comprend des éléments de maintien mobiles radialement dans le corps femelle entre une position radiale interne de maintien de l'élément mâle et une position radiale externe de dégagement.

L'invention concerne également un raccord rapide qui comprend un élément femelle, conforme à ce qui précède, et un élément mâle de raccord rapide complémentaire, comprenant une surface radiale externe. Selon l'invention, lorsque l'élément mâle est accouplé avec l'élément femelle, le joint principal est interposé entre la surface radiale externe de l'élément mâle et une surface radiale interne de la bague tiroir.

Selon des caractéristiques avantageuses de l'invention, prises isolément ou en combinaison :
- l'élément mâle comprend une collerette qui fait saillie de la surface radiale externe et avec laquelle le dispositif de verrouillage coopère en configuration accouplée ; et
- l'élément mâle est apte à venir en butée contre la bague poussoir, en cours d'accouplement de l'élément mâle avec l'élément femelle.

L'invention sera mieux comprise à la lecture de la description qui va suivre, donnée uniquement à titre d'exemple non limitatif et non exhaustif et faite en se référant aux dessins dans lesquels :
- Les figures 1 à 3 sont des coupes longitudinales d'un raccord rapide conforme à l'invention, qui comprend un élément femelle également conforme à l'invention, ce raccord étant représenté en configuration désaccouplée sur la figure 1, en cours d'accouplement sur la figure 2 et en configuration accouplée sur la figure 3 ; et
- La figure 4 est une coupe longitudinale partielle de l'élément femelle des figures 1 à 3, à plus grande échelle, représenté accouplé à un élément mâle différent de celui des figures 1 à 3.

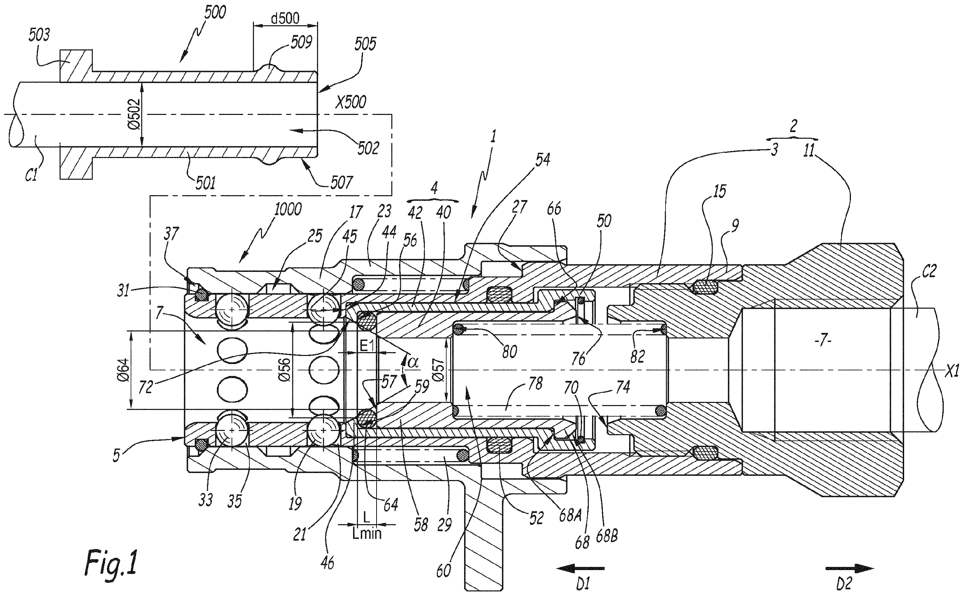

Dans ce qui suit, le terme « axial » correspond à une direction orientée parallèlement à l'axe longitudinal d'accouplement X1 défini dans ce qui suit et représenté aux figures 1 à 3, le terme « radial » correspondant à une direction orientée radialement par rapport à cet axe X1. De plus, on désigne par « direction avant D1 » une direction parallèle à l'axe longitudinal d'accouplement X1 et orientée vers la gauche de la figure 1 et par « direction arrière D2 » une direction de sens opposé.

Tel que cela est visible aux figures 1 à 3, l'élément femelle 1 et l'élément mâle 500 constituent des parties d'un raccord rapide fluidique 1000, ces parties étant complémentaires et aptes à être accouplées ensemble pour former le raccord 1000.

L'élément mâle 500 présente une forme générale tubulaire définissant un axe principal X500 et comprend en l'espèce un corps principal 501 sensiblement cylindrique et coaxial avec cet axe X500. Un canal 502 de passage du fluide est ménagé au travers du corps principal 501 le long de l'axe X500. Une première conduite C1 de fluide est connectée à une première extrémité 503 du corps principal 501, une deuxième extrémité 505 du corps principal 501 étant ouverte, le fluide étant destiné à traverser l'élément mâle 500 via le canal 502 dans la direction D1. Le fluide est transmis à l'élément mâle 500 par l'élément femelle 1 via l'extrémité 505 en configuration accouplée. Le corps principal 501 définit une surface radiale externe 507, de forme sensiblement cylindrique à base circulaire et coaxiale avec l'axe X500. Une collerette 509, de forme annulaire, fait saillie de la surface radiale externe 507 entre les extrémités 503 et 505. La collerette 509 présente un profil arrondi sans arête.

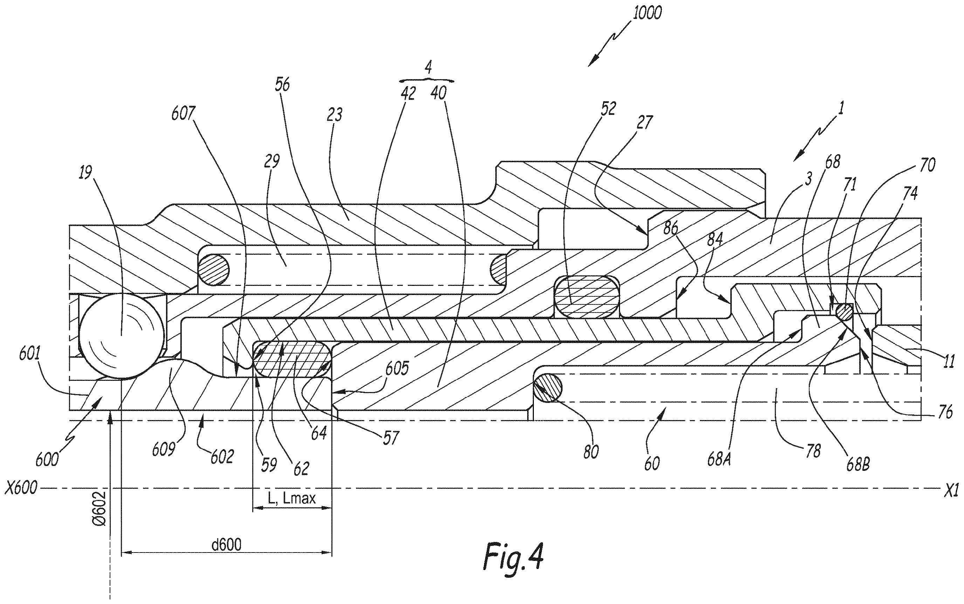

La figure 4 représente un élément mâle 600, qui peut également constituer une partie du raccord rapide fluidique 1000 en remplacement de l'élément mâle 500 des figures 1 à 3. Les éléments mâles 500 et 600 sont similaires, mais présentent des dimensions différentes. Les caractéristiques communes entre l'élément mâle 600 et l'élément mâle 500 sont identifiées sur la figure 4 avec des signes de référence augmentés de 100. Ainsi, l'élément mâle 600 définit un axe principal X600, et comprend un corps principal 601 sensiblement cylindrique et coaxial avec cet axe principal. L'élément mâle comprend également un canal 602 ménagé au travers du corps principal 601, une extrémité 605 ouverte, une surface radiale externe 607 et une collerette 609. L'élément mâle 600 se différencie de l'élément mâle 500 en ce que :
- la surface radiale externe 607 à l'arrière de la collerette 609 présente un diamètre supérieur à celui de la surface radiale externe 507 à l'arrière de la collerette 509,
- la collerette 609 présente un diamètre extérieur supérieur à celui de la collerette 509,
- une distance d600, mesurée parallèlement à l'axe principal X600, incluant la longueur axiale de la collerette 609 et la distance axiale séparant la collerette 609 de la surface axiale de l'extrémité 605 ouverte, est supérieure à une distance d500, mesurée parallèlement à l'axe principal X500, incluant la longueur axiale de la collerette 509 et la distance axiale séparant la collerette 509 de la surface axiale de l'extrémité 505 ouverte,
- la longueur axiale de la collerette 609 est supérieure à celle de la collerette 509, la longueur axiale étant mesurée le long de l'axe X500.

L'élément mâle 600 représente les géométries d'extrémité au maximum des tolérances admises alors que l'élément mâle 500 représente les géométries d'extrémité au minimum des tolérances admises.

L'élément femelle 1 comprend un corps femelle 2 comprenant un corps d'accueil 3 de l'élément mâle 500 ou 600 et une bague arrière 11. Le corps d'accueil 3 est de forme générale tubulaire à base circulaire, de sorte qu'il définit un axe longitudinal d'accouplement X1 avec lequel cette forme tubulaire est coaxiale. Le corps d'accueil 3 se termine à l'avant par une extrémité avant 5 ouverte, qui est traversée par l'axe d'accouplement X1 et par l'intermédiaire de laquelle l'élément mâle 500 ou 600 peut être introduit dans un canal interne 7 du corps d'accueil 3, selon la direction D2 orientée vers l'arrière, comme cela est séquentiellement représenté aux figures 1, 2 et 3. L'élément femelle 1 est conçu pour que l'élément mâle 500 ou 600 soit coaxial, au moins approximativement, avec l'élément femelle 1, lorsque ces deux éléments sont accouplés. Le corps d'accueil 3 comprend également une extrémité arrière 9, le canal interne 7 s'étendant depuis l'extrémité avant 5 jusqu'à l'extrémité arrière 9. La bague arrière 11, à laquelle est connectée une deuxième conduite C2 à raccorder avec la première conduite C1, est fixée coaxialement au corps d'accueil 3 par son extrémité arrière 9, par vissage, cette fixation étant rendue étanche à l'aide d'un joint arrière torique 15. La bague arrière 11 prolonge le corps d'accueil 3, et en particulier le canal interne 7, selon la direction arrière D2, afin de mettre en communication ce dernier avec la deuxième conduite C2.

L'élément femelle 1 est pourvu d'un dispositif de verrouillage 17 de l'accouplement de l'élément mâle 500 ou 600 avec l'élément femelle 1, ce dispositif 17 permettant de verrouiller sélectivement l'élément mâle 500 ou 600 dans le corps d'accueil 3 et de libérer cet élément mâle 500 ou 600 du corps d'accueil 3. Le dispositif de verrouillage 17 comprend des billes de verrouillage 19 qui sont disposées au sein d'orifices radiaux 21 ménagés au travers du corps d'accueil 3 au niveau d'une première rangée placée dans une zone avant du corps d'accueil 3. Les billes de verrouillage 19 constituent des éléments de verrouillage mobiles par rapport au corps d'accueil 3, selon des trajectoires radiales par rapport à l'axe d'accouplement X1, à partir d'une position radiale interne de verrouillage, limitée par un col conique des orifices 21. Dans cette position radiale interne, les billes 19 dépassent à l'intérieur du canal interne 7. Les billes 19 sont mobiles jusqu'à une position radiale externe de déverrouillage dans laquelle elles sont en retrait du canal interne 7 au sein des orifices radiaux 21.

Le dispositif de verrouillage 17 comprend également des billes de maintien 33 qui sont disposées dans des orifices radiaux 35 ménagés au travers de la paroi du corps d'accueil 3, de forme similaire aux orifices radiaux 21. Les orifices radiaux 35 sont disposés selon une deuxième rangée située entre l'extrémité avant 5 et la première rangée d'orifices radiaux 21. Comme les billes de verrouillage 19, les billes de maintien 33 sont mobiles par rapport au corps d'accueil 3, selon des trajectoires radiales par rapport à l'axe d'accouplement X1, entre une position radiale interne dans laquelle elles dépassent à l'intérieur du canal interne 7 et une position radiale externe dans laquelle les billes de maintien 33 sont en retrait du canal interne 7 dans les orifices radiaux 35.

Ainsi, deux rangées successives de billes 19 et 33 mobiles sont prévues à l'extrémité avant 5 du corps d'accueil 3.

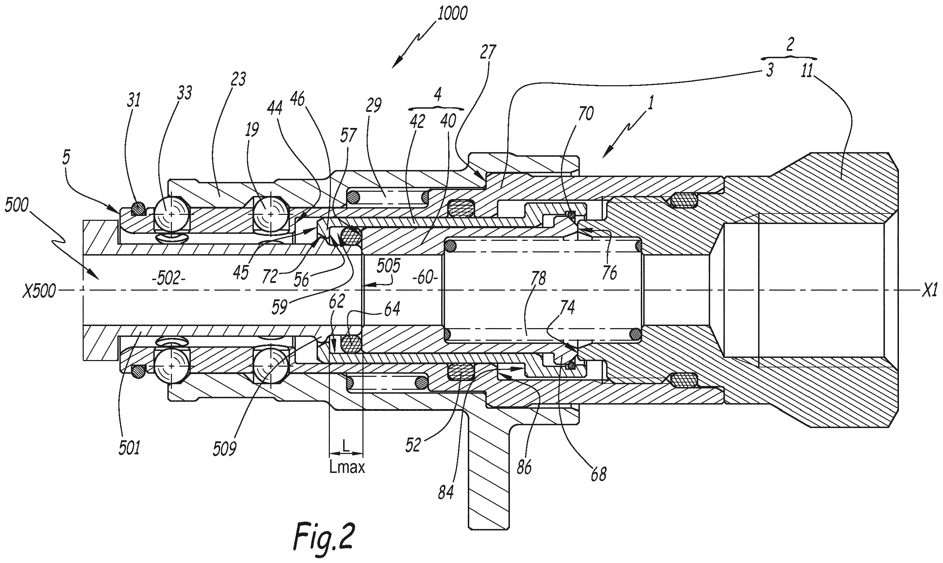

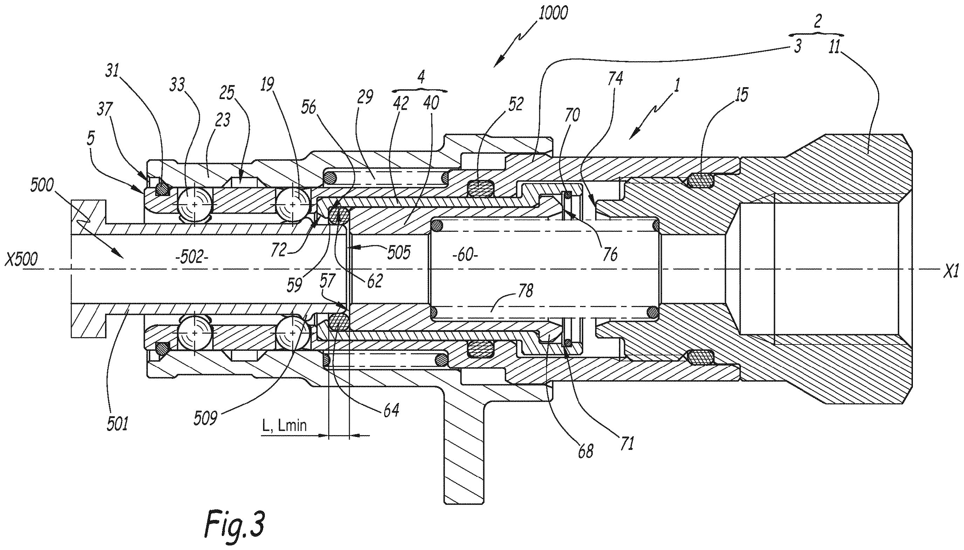

En position radiale interne, les billes 19 et 33 s'opposent à la circulation axiale de l'élément mâle 500 ou 600 par interaction avec la collerette 509 ou 609, et les billes 19 verrouillent l'élément mâle 500 ou 600, en particulier si cette collerette 509 ou 609 est située à l'arrière des billes 19 comme cela est le cas lorsque l'élément mâle 500 ou 600 est dans une position accouplée, comme représenté à la figure 3. L'élément mâle 500 ou 600 est accouplé avec l'élément femelle 1 en étant verrouillé par les billes 19. En position radiale interne, les billes 19 et 33 s'opposent également à l'introduction de l'élément mâle 500 ou 600 dans le corps d'accueil 3. Lorsque les billes 19 et 33 sont en position radiale externe, comme c'est le cas à la figure 2, l'élément mâle 500 ou 600 peut circuler en translation le long de l'axe X1 au sein du corps d'accueil 3, et être accouplé ou désaccouplé, les billes 19 et 33 ne s'opposant plus au passage de la collerette 509 ou 609. Alors que la première rangée de billes 19 sert au verrouillage de l'élément mâle 500 ou 600 en position accouplée, la seconde rangée de billes 33, en position radiale interne, positionne la surface radiale externe 507 ou 607 de l'élément mâle 500 ou 600 dans le corps d'accueil 3, de façon à aligner, au moins approximativement, l'axe X1 avec l'axe X500 ou X600, respectivement. Les billes de maintien 33 limitent ainsi le débattement de l'élément mâle 500 ou 600 dans le corps d'accueil 3 par rapport à l'axe X1.

Le dispositif de verrouillage 17 comprend en outre une bague de verrouillage 23, qui est disposée autour du corps d'accueil 3 et mobile en translation parallèlement à l'axe d'accouplement X1 par rapport au corps d'accueil 3. La bague de verrouillage 23 est mobile entre une position de blocage dans laquelle elle bloque les billes 19 et 33 en position radiale interne, comme c'est le cas dans les figures 1 et 3, et une position de déblocage dans laquelle des dégagements 25 et 37 sont radialement alignés avec les orifices radiaux 21 et 35, respectivement, de façon à autoriser un déplacement radial centrifuge des billes 19 et 33 jusqu'à la position radiale externe. Ainsi, pour accoupler l'élément mâle 500 ou 600 avec l'élément femelle 1, la bague de verrouillage 23 est repoussée en direction arrière D2 jusqu'à arriver en butée contre un épaulement externe 27 du corps d'accueil 3. Un ressort 29 de rappel de la bague de verrouillage 23 en position de blocage, c'est-à-dire en direction avant D1 et à l'écart de l'épaulement 27, est prévu, de sorte que la bague de verrouillage 23 est en position de blocage en configuration désaccouplée. En pratique, le ressort 29 pousse la bague de verrouillage 23 vers sa position de blocage en direction avant D1 contre une butée axiale externe 31 du corps d'accueil 3, située au voisinage de l'extrémité avant 5. Dans cette position de blocage, la bague de verrouillage 23 entoure radialement et recouvre les billes 19 et 33.

L'élément femelle 1 comprend également un ensemble mobile 4, comprenant une bague poussoir 40 et une bague tiroir 42, mobile dans le canal interne 7 du corps femelle 2.

La bague tiroir 42 est de forme générale tubulaire à base circulaire. Elle est montée mobile en translation, au sein du canal interne 7, le long de l'axe d'accouplement X1. La translation de la bague tiroir 42 est bornée, c'est-à-dire limitée, dans la direction avant D1, par un épaulement interne 44 du corps d'accueil 3, prévu à l'arrière de la rangée d'orifices radiaux 21 au sein du canal interne 7. Cet épaulement interne 44 constitue une butée contre laquelle une surface annulaire et axiale 45 de l'extrémité avant 46 de la bague tiroir 42 tournée dans la direction D1 vient en appui en configuration désaccouplée. La bague poussoir 40 est montée mobile en translation à l'intérieur du corps d'accueil 3, et en particulier au sein de la bague tiroir 42, de sorte que la bague tiroir 42 est disposée autour de la bague poussoir 40. Les bagues poussoir 40 et tiroir 42 sont mobiles l'une par rapport à l'autre en translation le long de l'axe d'accouplement X1, et coulissent l'une dans l'autre. La bague poussoir 40 présente une forme générale tubulaire à base circulaire. Elle est coaxiale avec la bague tiroir 42, un canal interne 60 de la bague poussoir 40 étant en communication avec le canal interne 7 délimité par la bague arrière 11.

Au voisinage de son extrémité avant 46, la bague tiroir 42 comprend un épaulement interne 56. L'épaulement interne 56 et une surface annulaire et axiale 57 d'une extrémité avant 58 de la bague poussoir 40 forment deux parois axiales d'un logement 59, en forme de gorge interne de l'ensemble mobile, qui est ouvert sur le canal interne 7. En l'espèce, l'épaulement interne 56 forme une paroi avant du logement, alors que la surface 57 forme une paroi arrière du logement 59. La paroi avant 56 fait face à la paroi arrière 57, la paroi arrière étant tournée dans la direction avant D1 et limitant le logement 59 dans la direction arrière D2 et la paroi avant 56 étant tournée dans la direction arrière D2 et limitant le logement dans la direction avant D1, les deux parois 56 et 57 s'étendant dans des plans perpendiculaires à l'axe X1. Le fond du logement 59 est, quant à lui, formé par une surface radiale interne 62 de forme générale cylindrique de la bague tiroir 42 qui est disposée à l'arrière de l'épaulement interne 56 et qui rejoint l'épaulement interne 56. Le logement 59 forme donc une gorge de longueur axiale L variable en fonction de la position relative de la bague tiroir 42 par rapport à la bague poussoir 40 le long de l'axe d'accouplement X1. Cette longueur variable L est mesurée entre la paroi arrière 57 et la paroi avant 56 du logement 59, parallèlement à l'axe d'accouplement X1.

L'élément femelle 1 comprend également un joint principal 64 d'étanchéité de l'accouplement entre l'élément mâle 500 ou 600 et l'élément femelle 1 qui est disposé dans le logement 59. Le joint principal 64 est un joint torique élastiquement déformable, par exemple en élastomère, et dimensionné pour être, en configuration accouplée, en contact étanche, à sa périphérie, avec la surface radiale interne 62 de la bague tiroir 42, de sorte que le joint principal 64 est coaxial avec l'axe d'accouplement X1. On préfère que le joint 64 soit également en contact, à sa périphérie, avec la surface radiale interne 62 en configuration désaccouplée, comme illustré sur la figure 1. Comme illustré à la figure 3, le joint principal 64 est conçu pour être en contact étanche, à sa périphérie interne, avec la surface radiale externe 507 ou 607 de l'élément mâle 500 ou 600 lorsque le raccord 1000 est accouplé. Le joint principal 64 assure ainsi une étanchéité radiale de l'accouplement de l'élément femelle 1 avec l'élément mâle 500 ou 600. Seul le joint 64 est interposé axialement entre les parois avant 56 et arrière 57 du logement.

Un joint auxiliaire 52, de forme torique, est monté au sein d'une gorge annulaire intérieure du corps d'accueil 3, ouverte sur le canal interne 7, le joint auxiliaire 52 étant en contact glissant et étanche avec une surface radiale externe cylindrique 54 de la bague tiroir 42, tout autour de cette dernière. Le joint auxiliaire 52 est monté légèrement écrasé entre la surface 54 et le corps d'accueil 3 de sorte que l'étanchéité est assurée entre corps d'accueil 3 et bague tiroir 42. Lors de la translation de la bague tiroir 42, la surface 54 frotte contre le joint 52 parallèlement à l'axe X1 et le joint 52 reste en contact étanche avec le corps d'accueil et l'ensemble mobile 4. Ce joint auxiliaire 52 assure donc une étanchéité de l'accouplement entre l'élément mâle 500 ou 600 et l'élément femelle 1, complémentaire à l'étanchéité radiale obtenue grâce au joint principal 64. L'étanchéité complète du raccord 1000 est ainsi obtenue par l'action combinée des joints 52 et 64. De manière avantageuse, le joint auxiliaire 52, qui est soumis aux frottements axiaux lors de la translation de l'ensemble mobile 4 dans le corps d'accueil 3, peut être optimisé pour ces conditions, notamment dans la mesure où les dimensions du corps d'accueil 3 et de la bague tiroir 42 sont connues. Le joint principal 64 subit, comparativement au joint auxiliaire 52, une quantité de frottements plus limitée.

La translation de la bague poussoir 40 relativement à la bague tiroir 42 est bornée dans les directions avant D1 et arrière D2 par la bague tiroir 42, de façon à limiter les variations de la valeur de la longueur L du logement 59. Pour cela, la bague tiroir 42 comprend un épaulement interne arrière 66 contre lequel une surface avant 68A d'une saillie externe arrière 68 de la bague poussoir 40 est destiné à venir en butée lorsque la bague poussoir 40 est translatée dans la direction avant D1 par rapport à la bague tiroir 42, de sorte que les épaulement 66 et saillie 68 constituent une butée pour borner le déplacement de la bague poussoir 40 par rapport à la bague tiroir 42 selon la direction avant D1 et ainsi borner la longueur variable du logement à une valeur minimale prédéterminée Lₘᵢₙ, comme illustré à la figure 1 et à la figure 3. La bague tiroir 42 est également pourvue d'un anneau élastique interne 70, de préférence de type circlips, lequel est rapporté dans une gorge 71 ménagée sur la surface radiale interne 62 de la bague tiroir 42, entre l'épaulement interne arrière 66 et une extrémité arrière 50 de la bague tiroir 42. Une surface arrière 68B de la saillie externe arrière 68 de la bague poussoir 40 vient en butée contre l'anneau interne 70 lorsque la bague poussoir 40 est translatée selon la direction arrière D2 par rapport à la bague tiroir 42 en cours d'accouplement, de sorte que la surface arrière 68B et l'anneau interne 70 constituent une butée pour borner le déplacement de la bague poussoir 40 par rapport à la bague tiroir 42 selon la direction arrière D2 et ainsi borner la longueur variable du logement à une valeur maximale prédéterminée Lₘₐₓ supérieure à la valeur minimale Lₘᵢₙ, comme représenté à la figure 4. En pratique, la valeur maximale Lₘₐₓ est de l'ordre de 40 à 60% plus élevée que la valeur minimale Lₘᵢₙ. La surface avant 68A de la saillie externe arrière 68 s'étend dans un plan radial par rapport à l'axe X1, tout comme la surface correspondante de l'épaulement interne arrière 66. La surface arrière 68B, opposée à la surface avant 68A, de la saillie externe arrière 68, est quant à elle de forme conique coaxiale avec l'axe X1 et convergente dans la direction arrière D2. Quelle que soit la longueur L du logement 59 comprise entre Lₘᵢₙ et Lₘₐₓ, la surface radiale interne 62 du tiroir 42 forme le fond du logement 59.

Le joint principal 64 est dans un état dit « libre » dans les conditions suivantes :
- en l'absence d'élément mâle 500 ou 600 dans l'élément femelle 1,
- lorsque le joint principal 64 est monté dans la bague tiroir 42 mais sans contact avec les parois avant 56 et arrière 57.

Lorsqu'il est à l'état libre, le joint principal 64, présente une épaisseur axiale E1, mesurée parallèlement à l'axe d'accouplement X1 et visible à la figure 1, qui est préférentiellement inférieure à la valeur minimale Lₘᵢₙ de la longueur L variable. En pratique l'épaisseur axiale E1 est inférieure de 0,1 à 0,5 mm à la valeur minimale Lₘᵢₙ. Ainsi, lorsque le joint principal 64 n'est pas déformé par l'élément mâle 500 ou 600, les parois avant 56 et arrière 57 du logement 59 ne compriment pas le joint principal 64 axialement, ce qui permet d'améliorer la longévité du joint principal 64. En particulier, en configuration désaccouplée, lorsqu'aucun élément mâle 500 ou 600 n'est accouplé avec l'élément femelle 1, le joint principal 64 n'est pas sollicité axialement.

Quel que soit son état, le joint 64 est avantageusement en contact avec le fond du logement formé par la surface 62, comme illustré aux figures.

La translation de la bague poussoir 40 est également bornée par rapport au corps femelle 2 dans la direction arrière D2 par une surface avant 74, annulaire et axiale, de la bague arrière 11, contre laquelle une surface arrière 76 correspondante, également annulaire et axiale, de la bague poussoir 40 est destinée à venir en appui lorsque la bague poussoir 40 est déplacée selon la direction arrière D2. Ainsi, le corps femelle 2 comprend une butée pour borner le déplacement de la bague poussoir 40 par rapport au corps femelle selon la direction arrière D2.

En définitive, la translation de la bague poussoir 40 s'effectue dans le corps d'accueil 3 entre :
- une position avant, dans laquelle la surface avant 45 de la bague tiroir 42 est en butée contre l'épaulement interne 44, et dans laquelle la surface avant 68A de la bague poussoir 40 est en butée contre l'épaulement interne arrière 66 de la bague tiroir 42, et
- une position arrière, dans laquelle la surface arrière 76 de la bague poussoir 40 est en butée contre la surface avant 74 de la bague arrière 11.

En pratique, l'extrémité arrière 50 de la bague tiroir 42 n'arrive pas en butée contre la bague arrière 11, dans la mesure où, lors de son déplacement en direction arrière D2, le déplacement de la bague tiroir 42 est limité par sa mise en butée contre la surface avant 68A de la bague poussoir 40, elle-même en butée contre la bague arrière 11.

L'élément femelle 1 comprend un ressort 78, qui constitue un élément de rappel élastique de la bague poussoir 40 vers sa position avant. Le ressort 78 est monté entre un épaulement interne 80 de la bague poussoir 40 et un épaulement interne 82 de la bague arrière 11. Dans cette configuration, le ressort 78 repousse la bague poussoir 40 dans la direction avant D1 par rapport au corps d'accueil 3. Pour cela, le ressort 78 prend appui sur la bague arrière 11 du corps femelle 2. Si la bague poussoir 40 arrive en butée contre la bague tiroir 42 dans la direction avant D1, la bague poussoir 40 entraîne la bague tiroir 42 dans la direction avant D1 jusqu'à ce que cette dernière arrive en butée contre le corps d'accueil 3. Ainsi, en configuration désaccouplée, la bague tiroir 42 est mise en butée contre le corps d'accueil 3 dans la direction avant D1, sous l'action du ressort 78.

La surface 57 de l'extrémité avant 58, qui forme la paroi arrière du logement 59 du joint principal 64, présente une forme de couronne à partir de laquelle le canal interne 60 de la bague poussoir 40 s'étend. Le diamètre intérieur Φ57 de cette surface 57 d'extrémité avant 58 est inférieur au diamètre intérieur Φ56 de l'épaulement interne 56 , de sorte que la paroi arrière 57 du logement 59 s'étend au-delà de la paroi avant 56 du logement, selon une direction radiale interne, par rapport à l'axe d'accouplement X1. De plus, le diamètre intérieur Φ57 est inférieur ou égal au diamètre intérieur Φ64 du joint 64, de sorte que la paroi arrière du logement 59 s'étend au-delà du joint principal 64, selon une direction radiale interne, par rapport à l'axe d'accouplement X1. L'extrémité avant 58 est donc de diamètre intérieur Φ57 suffisamment faible pour former une butée, contre laquelle l'extrémité 505, respectivement 605 de l'élément mâle 500, respectivement 600, qui vient au contact du joint 64, vient en appui, lorsque l'élément mâle 500, respectivement 600 est en cours d'accouplement avec l'élément femelle 1, comme visible à la figure 2, respectivement à la figure 4. En cours d'accouplement, l'élément mâle 500, respectivement 600 est déplacé dans la direction arrière D2 et pousse ainsi la bague poussoir 40 dans cette même direction à l'encontre du ressort 78.

La paroi 57 et la bague poussoir 40 s'étendent donc au-delà du joint principal 64, selon une direction radiale interne, par rapport à l'axe d'accouplement X1.

De préférence, on considère que le diamètre intérieur Φ57 est inférieur ou égal au diamètre intérieur Φ64 du joint 64 en configuration désaccouplée avec le joint 64 monté dans le logement 59. De façon préférentielle, en configuration désaccouplée avec le joint 64 monté dans le logement 59, le diamètre intérieur Φ57 est strictement inférieur au diamètre intérieur Φ64 du joint 64. De préférence, on prévoit que le diamètre Φ57 soit sensiblement égal au diamètre Φ502 du canal 502, respectivement au diamètre Φ602 du canal 602.

Dans le présent exemple, on note que le diamètre intérieur Φ57 de l'extrémité avant 58 est le même que celui de la paroi 57.

La dimension radiale de l'épaulement interne 56 est préférentiellement supérieure à la moitié de la dimension radiale de la section du joint principal 64 à l'état libre, pour être compatible avec des collerettes d'éléments mâles de toute géométrie, tout en étant apte à maintenir le joint 64 au sein du logement 59.

La bague tiroir 42 comprend une surface avant conique 72 qui relie l'épaulement interne 56 et la surface annulaire axiale avant 45. Cette surface avant conique 72 est coaxiale avec l'axe d'accouplement X1 et forme un cône intérieur qui converge selon la direction arrière D2. L'angle d'ouverture α de la surface conique 72 est préférentiellement égal à environ 60°. En variante, l'angle α est compris entre environ 45 et 70°, préférentiellement entre 50° et 65°. La surface conique 72 permet à la bague tiroir 42 d'être compatible à la fois avec l'élément mâle 500 et l'élément mâle 600, et plus généralement aux dimensions de ces éléments mâles.

Pour accoupler l'élément mâle 500 ou 600 et l'élément femelle 1, un opérateur repousse la bague de verrouillage 23 en direction arrière, jusqu'en butée contre le corps d'accueil 3 pour libérer les billes 19 et 33. L'opérateur saisit alors l'élément mâle 500 ou 600 et l'introduit dans le corps d'accueil 3 dans l'élément femelle 1. L'élément mâle 500 ou 600 passe alors au travers des rangées de billes 33 et 19 mobiles dans le corps d'accueil 3 puis au travers du joint principal 64, en le comprimant radialement contre le fond 62 du logement 59, jusqu'à venir en butée contre la bague poussoir 40. Cette dernière est alors poussée par l'élément mâle 500 ou 600 en direction arrière D2 par rapport au corps d'accueil 3, jusqu'à ce que la bague poussoir 40 parvienne en butée contre la bague arrière 11. Pendant le déplacement de la bague poussoir 40 dans le corps d'accueil 3, la bague tiroir 42 est entraînée par la bague poussoir 40 en butée arrière contre l'anneau élastique 70. La bague tiroir 42, en translatant dans la direction arrière D2 par rapport au corps femelle 2, frotte alors contre le joint auxiliaire 52. En définitive, lorsque la bague poussoir 40 est en butée contre la bague arrière 11, l'extrémité 505 ou 605 de l'élément mâle est en butée contre la bague poussoir 40 et le joint principal 64 est radialement comprimé entre la surface radiale externe 507 ou 607 et la surface radiale interne 62, de sorte que l'étanchéité est prise. Au début de l'accouplement, la bague tiroir 42 étant repoussée en contact du corps d'accueil 3 en direction avant D1 par le ressort 78 et la bague poussoir 40, la prise d'étanchéité du raccord 1000 est effectuée particulièrement tôt dans le processus d'accouplement.

L'opérateur, qui a senti l'élément mâle 500 ou 600 venir en butée dans la direction arrière D2 dans l'élément femelle 1, lorsque la bague poussoir 40 parvient au contact du corps femelle 2, relâche la bague de verrouillage 23 qui revient en direction avant D1 sous l'action du ressort 29, jusqu'à arriver en butée contre la butée axiale externe 31 du corps d'accueil 3. Lors du retour de la bague de verrouillage 23, cette dernière entraîne les billes 19 et 33 vers leur position interne en les chassant des dégagements 25 et 37. En particulier, les billes 19 sont du côté avant de la collerette 509 ou 609 de l'élément mâle, comme représenté aux figures 3 et 4. L'opérateur relâche alors l'élément mâle 500 ou 600. Le ressort 78, ainsi que la pression du fluide transitant dans le raccord 1000, si une circulation de fluide a été établie, repoussent l'ensemble composé de l'élément mâle 500 ou 600, du joint principal 64, de la bague poussoir 40 et de la bague tiroir 42 dans la direction avant D1, jusqu'à ce que la collerette 509 ou 609 soit axialement bloquée au contact des billes de verrouillage 19. Les billes de maintien 33 assurent quant à elle le caractère coaxial de l'accouplement, lors du mouvement de l'élément mâle 500 ou 600 dans la direction avant D1 en cours d'accouplement et en configuration accouplée, de sorte que la surface radiale externe 507 ou 607 reste dûment en contact étanche avec le joint principal 64 sur toute sa circonférence interne. Le fluide circule depuis la conduite C1 à travers le canal interne 60 et le canal interne 502 ou 602 vers la conduite C2, ou sens inverse, l'étanchéité entre élément mâle 500 ou 600 et corps femelle 2 étant assurée de manière optimale par le joint principal 64 et par le joint auxiliaire 52.

En fonction des dimensions effectives de l'élément mâle, et en particulier le diamètre de la surface radiale externe 507 ou 607, la géométrie de la collerette 509 ou 609, et la distance d500 ou d600, et en fonction du moment de la prise d'étanchéité du joint principal 64 en cours d'accouplement, la longueur L du logement est éventuellement augmentée par déplacement relatif de la bague poussoir 40 par rapport à la bague tiroir 42.

Comme représenté à la figure 2, dans le cas où le raccord 1000 comprend l'élément mâle 500, en cours d'accouplement, lorsque la bague poussoir 40 est en butée contre la bague arrière 11 et l'extrémité 505 de l'élément mâle 500 est en butée contre la bague poussoir, la longueur L atteint sa valeur maximale, la bague poussoir 40 étant en butée contre la bague tiroir 42 dans la direction arrière D2, la collerette 509 étant alors disposée dans le volume délimité par la surface avant conique 72 de la bague tiroir 42. Sous l'effet du ressort 78 et de l'éventuelle pression du fluide circulant dans le raccord 1000, la bague poussoir 40 et la bague tiroir 42 sont repoussées dans la direction avant D1 avec l'élément mâle 500. Dès lors que le fluide sous pression circule dans le raccord 1000, le joint principal 64 est repoussé par la pression dans la direction avant D1, par rapport au corps d'accueil 3, contre la bague tiroir 42. La position relative de la bague tiroir 42 par rapport à la bague poussoir 40 est alors ajustée pour que la longueur L soit adaptée aux dimensions du joint principal 64 comprimé, qui dépendent de la géométrie de l'élément mâle 500. Du fait que l'élément mâle 500 présente une distance d500 relativement faible, la bague tiroir 42, en configuration accouplée, est repoussée en direction avant D1 jusqu'en butée avant contre le corps d'accueil 3, la bague poussoir 40 revenant en butée sur l'avant contre la bague tiroir 42 du fait de la faible déformation du joint 64 au contact de la surface radiale externe 507 de diamètre faible. En d'autres termes, la longueur L du logement est à sa valeur minimale Lₘᵢₙ et l'élément mâle 500 n'est plus en butée contre la bague poussoir 40, comme visible à la figure 3.

Dans le cas où le raccord 1000 comprend l'élément mâle 600, lorsqu'en cours d'accouplement, cet élément mâle 600 vient au contact du joint principal 64, le joint principal 64 est alors comprimé radialement par la surface radiale externe 607 et, à volume équivalent de joint principal 64, s'étend axialement par déformation de façon plus importante que dans le cas de l'élément mâle 500. La paroi avant du logement, formée par l'épaulement 56 de la bague tiroir 42, s'écarte donc par rapport à la surface annulaire et axiale 57 de la bague poussoir 40 qui forme la paroi arrière du logement 59 jusqu'à ce que la bague tiroir 42 vienne en butée contre l'anneau interne 70 de la bague poussoir 40, et que la longueur L atteigne sa valeur maximale Lₘₐₓ. L'étanchéité est alors prise. La bague poussoir 40 est ensuite repoussée en direction arrière D2 par l'élément mâle 600, via l'extrémité 605 en butée contre la bague poussoir 40, jusqu'en butée contre le corps femelle. En fin d'accouplement, lorsque la collerette 609 est ramenée par le ressort 78, et éventuellement par la pression du fluide, contre les billes de verrouillage 19 en position radiale interne, la bague poussoir 40 reste dans une position décalée par rapport à la bague tiroir et en butée contre la bague tiroir, c'est-à-dire que la longueur L reste à sa valeur maximale Lₘₐₓ. Du fait de la relativement grande distance d600, l'élément mâle 600 reste en butée contre la bague poussoir 40 et, la bague tiroir 42 reste écartée de l'épaulement interne 44 du corps d'accueil 3.

Comme cela est visible à la figure 3, la valeur minimale Lₘᵢₙ de la longueur L est adaptée pour que le joint principal 64, coopérant avec l'élément mâle 500, dont le diamètre de la surface radiale externe 507 est relativement faible, remplisse le volume du logement et présente une déformation suffisante pour assurer l'étanchéité du raccord 1000. De même, comme cela est visible à la figure 4, la valeur maximale Lₘₐₓ de la longueur L est adaptée pour que le joint principal 64, coopérant avec l'élément mâle 600, dont le diamètre de la surface radiale externe 607 est relativement élevé, remplisse le volume du logement et présente une déformation suffisante pour assurer l'étanchéité du raccord 1000. L'étanchéité est ainsi assurée pour tout élément mâle de géométrie intermédiaire entre la géométrie minimale de l'élément mâle 500 et maximale de l'élément mâle 600.

Après la mise sous pression, la zone de contact entre le joint principal 64 et l'élément mâle 500 ou 600 est localisée axialement, quelle que soit la distance d500 ou d600, dans la mesure où le logement est borné à la valeur maximale Lₘₐₓ On connaît ainsi précisément la position de la zone du contact potentielle entre le joint 64 et la surface radiale externe de tout élément mâle complémentaire par rapport à l'extrémité avant de l'élément mâle, position qui est identique quelle que soit la géométrie de cet élément mâle, de sorte que cette surface radiale externe peut être facilement adaptée pour ne pas endommager le joint 64 par frottement.

L'élément mâle 500 ou 600 entrant en butée contre la bague poussoir 40 qui définit la paroi arrière du logement 59 du joint principal 64 en cours d'accouplement, le joint principal 64 est précisément localisé axialement par rapport à l'extrémité 505 ou 605.

Le joint auxiliaire 52 assurant une étanchéité entre l'ensemble mobile 4 et corps femelle 2 est avantageusement disposé entre la bague tiroir 42 et corps d'accueil 3 ce qui permet de limiter ses frottements. Néanmoins, en variante, le joint 52 est disposé entre la bague poussoir 40 et le corps d'accueil 3, ce qui entraîne une quantité de frottements plus importante, dans la mesure où la translation de la bague poussoir 40 s'effectue sur une distance plus importante que celle de la bague tiroir 42.

L'élément mâle 500 ou 600 étant en butée contre le corps femelle, via la bague poussoir 40, en direction arrière D2 en cours d'accouplement, la prise d'étanchéité radiale du joint principal 64 avec l'élément mâle et la bague tiroir 42 est assurée.

En variante, le joint principal 64 est un joint annulaire de section non circulaire.

En variante, tout dispositif de verrouillage connu peut être mis en oeuvre en lieu et place du dispositif de verrouillage 17 décrit ci-avant. En particulier, on peut prévoir un dispositif de verrouillage apte à verrouiller l'accouplement d'un élément mâle dépourvu de collerette, par exemple à l'aide d'un système de billes maintenues en coincement de l'élément mâle par une surface inclinée d'une bague de verrouillage, ou d'un système à griffes ou à doigts de verrouillage coopérant avec d'autres géométries de collerette.

En variante, des éléments de maintien autres que sous forme de billes peuvent être employés dans l'élément femelle de l'invention.

En variante, on prévoit une soupape dans l'élément femelle et/ou dans l'élément mâle. En particulier, une telle soupape peut être solidaire de la bague poussoir, dans le cas où le verrouillage est effectué avec la bague poussoir 40 décalée vers l'arrière par rapport à sa position avant en configuration désaccouplée.

En variante, la butée de l'élément mâle contre la bague poussoir peut être prévue plus en arrière de cette dernière. Dans ce cas, on prévoit que la paroi arrière du logement ne s'étend pas au-delà du joint 64 dans une direction radiale interne par rapport à l'axe d'accouplement. Sur la bague poussoir 40, la surface de butée pour l'élément mâle est alors décalée vers l'arrière par rapport à la paroi arrière 57 du logement 59. Par exemple, la surface de butée est formée par un épaulement, c'est-à-dire une section de diamètre réduit par rapport à la paroi 57 à partir de laquelle le canal interne 60 de la bague poussoir 40 s'étend. Dans cette variante également, le diamètre intérieur de l'extrémité avant 58 est strictement inférieur au diamètre intérieur Φ64 du joint 64 en configuration désaccouplée. Ainsi l'élément mâle est apte à venir en appui contre la surface de butée de la bague poussoir en cours d'accouplement.

En variante, un ressort additionnel est prévu entre le corps femelle 2 et la bague tiroir 42, par exemple entre un épaulement externe 84 de la bague tiroir 42 et un épaulement interne 86 du corps d'accueil 3, pour repousser la bague tiroir 42 en direction arrière D2, ce qui garantit la prise d'étanchéité au plus tôt dans le processus d'accouplement. Ce ressort particulier présente alors un effort de rappel très inférieur à celui du ressort principal 78. La bague tiroir 42 est ainsi maintenue au plus près du joint principal 64 pendant l'accouplement.

En variante, les parois avant et arrière du logement 59 sont légèrement inclinées par rapport à la direction radiale par rapport à l'axe X1, la paroi avant restant cependant tournée dans la direction arrière et la paroi arrière tournée dans la direction avant.

En variante, la mise en butée de la bague poussoir sur la bague tiroir pour borner le rapprochement des parois avant et arrière du logement 59 est omise.

En variante, le dispositif de verrouillage de l'élément mâle dans le corps femelle en configuration accouplée est mis en oeuvre entre un support du corps femelle et un support du corps mâle.

Les modes de réalisation et variantes décrits dans ce qui précède peuvent être combinés pour créer de nouveaux modes de réalisation de l'invention.

## Revendications

1. Elément femelle (1) de raccord rapide étant apte à être accouplé avec un élément mâle (500 ; 600) de raccord rapide complémentaire pour la jonction de deux conduites (C1, C2) de fluide, l'élément femelle comprenant :
- un corps femelle (2) qui définit un axe longitudinal d'accouplement (X1) et qui est apte à recevoir l'élément mâle introduit selon une direction arrière (D2),
- une bague poussoir (40), qui est montée mobile en translation à l'intérieur du corps femelle le long de l'axe longitudinal d'accouplement (X1),
- un élément de rappel élastique (78) de la bague poussoir dans une direction avant (D1), opposée à la direction arrière (D2), par rapport au corps femelle, et
- un joint principal (64) d'étanchéité logé dans un logement (59) de l'élément femelle et apte à coopérer avec l'élément mâle introduit dans le corps femelle,
l'élément femelle (1) étant **caractérisé en ce que** :
- l'élément femelle comprend en outre une bague tiroir (42), qui est mobile par rapport au corps femelle (2) le long de l'axe longitudinal d'accouplement (X1) et qui est disposée autour de la bague poussoir (40), la bague tiroir (42) formant un fond (62) et une paroi avant (56) du logement (59) du joint principal, la paroi avant étant tournée dans la direction arrière (D2),
- une extrémité avant (58) de la bague poussoir forme une paroi arrière (57) du logement (59) du joint principal, un diamètre intérieur (Φ57) de l'extrémité avant (58) étant inférieur à un diamètre intérieur (Φ64) du joint principal (64), et
- la bague poussoir (40) est mobile en translation par rapport à la bague tiroir (42) le long de l'axe longitudinal d'accouplement (X1).

2. Elément femelle (1) selon la revendication 1, **caractérisé en ce que** la bague poussoir (40) est apte à venir en butée contre la bague tiroir (42) selon la direction arrière (D2).

3. Elément femelle (1) selon l'une quelconque des revendications précédentes, **caractérisé en ce que** l'élément femelle comprend des moyens (40, 78) de rappel élastique de la bague tiroir (42) en butée contre le corps femelle (2) selon la direction avant (D1) en configuration désaccouplée.

4. Elément femelle (1) selon l'une quelconque des revendications précédentes, **caractérisé en ce que** la bague poussoir (40) est apte à venir en butée contre la bague tiroir (42) selon la direction avant (D1).

5. Elément femelle (1) selon la revendication 4, **caractérisé en ce que**, en configuration désaccouplée, l'élément de rappel élastique (78) rappelle la bague poussoir (40) en butée dans la direction avant (D1) contre la bague tiroir (42), une longueur axiale (L) du logement (59), mesurée entre la paroi avant (56) et la paroi arrière (57) parallèlement à l'axe longitudinal d'accouplement (X1), étant alors supérieure à une épaisseur axiale (E1), mesurée parallèlement à l'axe longitudinal d'accouplement, du joint principal (64) à l'état libre.

6. Elément femelle (1) selon l'une quelconque des revendications précédentes, **caractérisé en ce que**, selon une direction radiale interne par rapport à l'axe longitudinal d'accouplement (X1), la paroi arrière (57) s'étend au-delà de la paroi avant (56).

7. Elément femelle (1) selon l'une quelconque des revendications précédentes, **caractérisé en ce que**, selon une direction radiale interne par rapport à l'axe longitudinal d'accouplement (X1), la paroi arrière (57) s'étend au-delà du joint principal (64).

8. Elément femelle (1) selon l'une quelconque des revendications précédentes, **caractérisé en ce que** la bague tiroir (42) et la bague poussoir (40) forment un ensemble mobile (4) à l'intérieur du corps femelle (2) et **en ce que** l'élément femelle comprend en outre un joint auxiliaire (52) qui est disposé entre l'ensemble mobile (4) et le corps femelle (2).

9. Elément femelle (1) selon l'une quelconque des revendications précédentes, **caractérisé en ce que** la bague poussoir (40) est apte à venir en butée (74, 76) contre le corps femelle (2) selon la direction arrière (D2).

10. Elément femelle (1) selon l'une quelconque des revendications précédentes, **caractérisé en ce que** la bague tiroir (42) comprend une surface avant conique (72) qui est coaxiale avec l'axe longitudinal d'accouplement (X1) et qui converge selon la direction arrière (D2), avec un angle de convergence (a) compris entre 45 et 70°.

11. Elément femelle (1) selon l'une quelconque des revendications précédentes, **caractérisé en ce qu'**il comprend un dispositif de verrouillage (17) de l'élément mâle dans le corps femelle dans une configuration accouplée du raccord rapide, le dispositif de verrouillage (17) comprenant des éléments de verrouillage (19) mobiles dans le corps femelle (2), entre une position radiale interne de verrouillage de l'élément mâle (500 ; 600) et une position radiale externe de déverrouillage de l'élément mâle, et une bague de verrouillage (23) mobile entre une position de blocage des éléments de verrouillage en position radiale interne et une position de déblocage autorisant le mouvement radial des éléments de verrouillage.

12. Elément femelle (1) selon la revendication 11, **caractérisé en ce que** le dispositif de verrouillage (17) comprend en outre des éléments de maintien (33) mobiles radialement dans le corps femelle (2) entre une position radiale interne de maintien de l'élément mâle (500 ; 600) et une position radiale externe de dégagement.

13. Raccord rapide (1000), **caractérisé en ce qu'**il comprend :
- un élément femelle (1), conforme à l'une quelconque des revendications précédentes, et
- un élément mâle (500 ; 600) de raccord rapide complémentaire, comprenant une surface radiale externe (507, 607),
et **en ce que**, lorsque l'élément mâle est accouplé avec l'élément femelle, le joint principal (64) est interposé entre la surface radiale externe de l'élément mâle et une surface radiale interne (62) de la bague tiroir (42).

14. Raccord rapide (1000) selon la revendication précédente, **caractérisé en ce que** l'élément mâle (500 ; 600) comprend une collerette (509, 609) qui fait saillie de la surface radiale externe (507) et avec laquelle le dispositif de verrouillage (17) coopère en configuration accouplée.

15. Raccord rapide (1000) selon l'une quelconque des revendications 13 ou 14, **caractérisé en ce que**, l'élément mâle (500 ; 600) est apte à venir en butée contre la bague poussoir (40), en cours d'accouplement de l'élément mâle avec l'élément femelle (1).

## Patentansprüche

1. Weibliches Schnellanschlusselement (1), das imstande ist, mit einem komplementären männlichen Schnellanschlusselement (500; 600) gekuppelt zu werden, um zwei Fluidleitungen (C1, C2) zu verbinden, wobei das weibliche Element Folgendes umfasst:
- einen weiblichen Körper (2), der eine Kupplungslängsachse (X1) definiert und imstande ist, das männliche Element aufzunehmen, das in einer Rückwärtsrichtung (D2) eingefügt wird,
- einen Schubring (40), der entlang der Kupplungslängsachse (X1) translationsbeweglich im Inneren des weiblichen Körpers montiert ist,
- ein Element zur elastischen Rückstellung (78) des Schubrings in einer der Rückwärtsrichtung (D2) entgegengesetzten Vorwärtsrichtung (D1) in Bezug auf den weiblichen Körper, und
- eine Hauptdichtung (64), die in einer Aufnahme (59) des weiblichen Elements untergebracht ist und imstande ist, mit dem in den weiblichen Körper eingefügten männlichen Element zusammenzuwirken,
wobei das weibliche Element (1) **dadurch gekennzeichnet ist, dass**:
- das weibliche Element ferner einen Zugring (42) umfasst, der in Bezug auf den weiblichen Körper (2) entlang der Kupplungslängsachse (X1) beweglich ist und der um den Schubring (40) angeordnet ist, wobei der Zugring (42) einen Boden (62) und eine Vorderwand (56) der Aufnahme (59) der Hauptdichtung bildet, wobei die Vorderwand in Rückwärtsrichtung (D2) gewandt ist,
- ein vorderes Ende (58) des Schubrings eine Rückwand (57) der Aufnahme (59) der Hauptdichtung bildet, wobei ein Innendurchmesser (Φ57) des vorderen Endes (58) kleiner ist als ein Innendurchmesser (Φ64) der Hauptdichtung (64), und
- der Schubring (40) in Bezug auf den Zugring (42) entlang der Kupplungslängsachse (X1) translationsbeweglich ist.

2. Weibliches Element (1) nach Anspruch 1, **dadurch gekennzeichnet, dass** der Schubring (40) imstande ist, an dem Zugring (42) in Rückwärtsrichtung (D2) zur Anlage zu kommen.

3. Weibliches Element (1) nach einem der vorhergehenden Ansprüche, **dadurch gekennzeichnet, dass** das weibliche Element Mittel (40, 78) zum elastischen Rückstellen des an dem weiblichen Körper (2) anliegenden Zugrings (42) in Vorwärtsrichtung (D1) in der entkuppelten Konfiguration umfasst.

4. Weibliches Element (1) nach einem der vorhergehenden Ansprüche, **dadurch gekennzeichnet, dass** der Schubring (40) imstande ist, an dem Zugring (42) in Vorwärtsrichtung (D1) zur Anlage zu kommen.

5. Weibliches Element (1) nach Anspruch 4, **dadurch gekennzeichnet, dass** in der entkuppelten Konfiguration das Element zum elastischen Rückstellen (78) den Schubring (40) in der Vorwärtsrichtung (D1) zurückstellt, so dass er am Zugring (42) anliegt, wobei eine zwischen der Vorderwand (56) und der Rückwand (57) parallel zur Kupplungslängsachse (X1) gemessene axiale Länge (L) der Aufnahme (59) in diesem Fall größer ist als eine parallel zur Kupplungslängsachse gemessene axiale Dicke (E1) der Hauptdichtung (64) im freien Zustand.

6. Weibliches Element (1) nach einem der vorhergehenden Ansprüche, **dadurch gekennzeichnet, dass** sich die Rückwand (57) in einer inneren radialen Richtung in Bezug auf die Kupplungslängsachse (X1) über die Vorderwand (56) hinaus erstreckt.

7. Weibliches Element (1) nach einem der vorhergehenden Ansprüche, **dadurch gekennzeichnet, dass** sich die Rückwand (57) in einer inneren radialen Richtung in Bezug auf die Kupplungslängsachse (X1) über die Hauptdichtung (64) hinaus erstreckt.

8. Weibliches Element (1) nach einem der vorhergehenden Ansprüche, **dadurch gekennzeichnet, dass** der Zugring (42) und der Schubring (40) eine bewegliche Einheit (4) im Inneren des weiblichen Körpers (2) bilden und dass das weibliche Element ferner eine Zusatzdichtung (52) umfasst, die zwischen der beweglichen Einheit (4) und dem weiblichen Körper (2) angeordnet ist.

9. Weibliches Element (1) nach einem der vorhergehenden Ansprüche, **dadurch gekennzeichnet, dass** der Schubring (40) imstande ist, in der Rückwärtsrichtung (D2) an dem weiblichen Körper (2) zur Anlage zu kommen (74, 76).

10. Weibliches Element (1) nach einem der vorhergehenden Ansprüche, **dadurch gekennzeichnet, dass** der Zugring (42) eine konische Vorderfläche (72) umfasst, die koaxial mit der Kupplungslängsachse (X1) ist und die in der Rückwärtsrichtung (D2) mit einem Konvergenzwinkel (a) zwischen 45 und 70° zusammenläuft.

11. Weibliches Element (1) nach einem der vorhergehenden Ansprüche, **dadurch gekennzeichnet, dass** es eine Vorrichtung zur Verriegelung (17) des männlichen Elements in dem weiblichen Körper in einer gekuppelten Position des Schnellanschlusses umfasst, wobei die Verriegelungsvorrichtung (17) Folgendes umfasst: Verriegelungselemente (19), die in dem weiblichen Körper (2) zwischen einer inneren radialen Position zur Verriegelung des männlichen Elements (500; 600) und einer äußeren radialen Position zur Entriegelung des männlichen Elements beweglich sind, und einen Verriegelungsring (23), der zwischen einer Position zur Blockierung der Verriegelungselemente in der inneren radialen Position und einer Deblockierungsposition, die eine radiale Bewegung der Verriegelungselemente erlaubt, beweglich ist.

12. Weibliches Element (1) nach Anspruch 11, **dadurch gekennzeichnet, dass** die Verriegelungsvorrichtung (17) ferner Halteelemente (33) umfasst, die in dem weiblichen Körper (2) zwischen einer inneren radialen Position zum Halten des männlichen Elements (500; 600) und einer äußeren radialen Freigabeposition radial beweglich sind.

13. Schnellanschluss (1000), **dadurch gekennzeichnet, dass** er Folgendes umfasst:
- ein weibliches Element (1) nach einem der vorhergehenden Ansprüche, und
- ein komplementäres männliches Schnellanschlusselement (500; 600), umfassend eine äußere radiale Fläche (507, 607),
und dass, wenn das männliche Element an das weibliche Element gekuppelt ist, die Hauptdichtung (64) zwischen der äußeren radialen Fläche des männlichen Elements und einer inneren radialen Fläche (62) des Zugrings (42) angeordnet ist.

14. Schnellanschluss (1000) nach dem vorhergehenden Anspruch, **dadurch gekennzeichnet, dass** das männliche Element (500; 600) einen Kragen (509, 609) umfasst, der von der äußeren radialen Fläche (507) vorragt und mit dem die Verriegelungsvorrichtung (17) in der gekuppelten Konfiguration zusammenwirkt.

15. Schnellanschluss (1000) nach einem der Ansprüche 13 oder 14, **dadurch gekennzeichnet, dass** das männliche Element (500; 600) imstande ist, während der Kupplung des männlichen Elements mit dem weiblichen Element (1) an dem Schubring (40) zur Anlage zu kommen.

## Claims

1. A socket element (1) for a quick connector able to be coupled with a complementary plug element (500; 600) for a quick connector to join two fluid pipes (C1, C2), the socket element comprising:
- a socket body (2) that defines a longitudinal coupling axis (X1) and that is able to receive the plug element inserted along a rear direction (D2),
- a pushing ring (40), which is mounted translatably inside the socket body along the longitudinal coupling axis (X1),
- an elastic return element (78) for returning the pushing ring in a forward direction (D1), opposite the rear direction (D2), relative to the socket body, and
- a primary sealing gasket (64) housed in a housing (59) of the socket element and able to cooperate with the plug element inserted into the socket body,
the socket element (1) being **characterized in that**:
- the socket element further comprises a slide-ring (42), which is movable relative to the socket body (2) along the longitudinal coupling axis (X1) and which is arranged around the pushing ring (40), the slide-ring (42) forming a bottom (62) and a front wall (56) of the housing (59) of the primary seal, the front wall being turned toward the rear direction (D2),
- a forward end (58) of the pushing ring forming a rear wall (57) of the housing (59) of the primary seal, an inner diameter (Φ57) of the forward end (58) being smaller than an inner diameter (Φ64) of the primary seal (64), and
- the pushing ring (40) is translatable relative to the slide-ring (42) along the longitudinal coupling axis (X1).

2. The socket element (1) according to claim 1, **characterized in that** the pushing ring (40) is able to abut against the slide-ring (42) along the rear direction (D2).

3. The socket element (1) according to any one of the preceding claims, **characterized in that** the socket element comprises elastic return means (40, 78) for returning the slide-ring (42) to abut against the socket body (2) in the forward direction (D1) in the uncoupled configuration.

4. The socket element (1) according to any one of the preceding claims, **characterized in that** the pushing ring (40) is able to abut against the slide-ring (42) along the forward direction (D1).

5. The socket element (1) according to claim 4, **characterized in that** in the uncoupled configuration, the elastic return element (78) returns the pushing ring (40) to abut in the forward direction (D1) against the slide-ring (42), an axial length (L) of the housing (59), measured between the front wall (56) and the rear wall (57) parallel to the longitudinal coupling axis (X1), then being greater than an axial thickness (E1), measured parallel to the longitudinal coupling axis, of the primary seal (64) in the free state.

6. The socket element (1) according to any one of the preceding claims, **characterized in that** along an inner radial direction relative to the longitudinal coupling axis (X1), the rear wall (57) extends beyond the front wall (56).

7. The socket element (1) according to any one of the preceding claims, **characterized in that** along an inner radial direction relative to the longitudinal coupling axis (X1), the rear wall (57) extends beyond the primary seal (64).

8. The socket element (1) according to any one of the preceding claims, **characterized in that** the slide-ring (42) and the pushing ring (40) form a movable assembly (4) inside the socket body (2) and **in that** the socket element further comprises an auxiliary seal (52) that is arranged between the moving assembly (4) and the socket body (2).

9. The socket element (1) according to any one of the preceding claims, **characterized in that** the pushing ring (40) is able to abut (74, 76) against the socket body (2) along the rear direction (D2).

10. The socket element (1) according to any one of the preceding claims, **characterized in that** the slide-ring (42) comprises a conical front surface (72) that is coaxial with the longitudinal coupling axis (X1) and that converges along the rear direction (D2), with a convergence angle (α) comprised between 45 and 70°.

11. The socket element (1) according to any one of the preceding claims, **characterized in that** it comprises a device (17) for locking the plug element in the socket body in a coupled configuration of the quick connector, the locking device (17) comprising movable locking elements (19) in the socket body (2), between an inner radial locking position of the plug element (500; 600) and an outer radial unblocking position of the plug element, and a locking ring (23) movable between a position blocking the locking elements in the inner radial position and an unblocking position allowing the radial movement of the locking elements.

12. The socket element (1) according to claim 11, **characterized in that** the locking device (17) further comprises maintaining elements (33) radially movable in the socket body (2) between an inner radial position maintaining the plug element (500; 600) and an outer radial release position.

13. A quick connector (1000), **characterized in that** it comprises:
- a socket element kit (1) according to any one of the preceding claims, and
- a complementary plug element (500; 600) for a quick connector, comprising an outer radial surface (507, 607),
and **in that**, when the plug element is coupled with the socket element, the primary seal (64) is inserted between the outer radial surface of the plug element and an inner radial surface (62) of the slide-ring (42).

14. The quick connector (1000) according to the preceding claim, **characterized in that** the plug element (500; 600) comprises a collar (509, 609) that protrudes from the outer radial surface (507) and with which the locking device (17) cooperates in the coupled configuration.

15. The quick connector (1000) according to any one of claims 13 or 14, **characterized in that** the plug element (500; 600) is able to abut against the pushing ring (40), during coupling of the plug element with the socket element (1).
